# EUROPÄISCHE PATENTANMELDUNG

(11) **EP 1 323 565 A2**
(43) Veröffentlichungstag der Anmeldung: **02.07.2003**
(21) Anmeldenummer: 02028318.0
(22) Anmeldetag: 17.12.2002
(51) Int. Cl.: B60K 7/00

(54) **Befestigung einer Achsbrücke**

(30) Priorität: 21.12.2001 DE 10163628
(71) Anmelder: ZF FRIEDRICHSHAFEN Aktiengesellschaft, 88038 Friedrichshafen (DE)
(72) Erfinder: Wendl, Harald, 94474 Vilshofen (DE); Häussler, Stefan, 94034 Passau-Patriching (DE)
(74) Vertreter: Zietlow, Karl-Peter

(57) **Zusammenfassung**

Die Achse mit einer unterhalb der Radachse angeordneten Achsbrücke (1) weist mindestens einen Antriebsmotor (2) auf, der ein Motorgehäuse (5) aufweist, sowie eine Federträgerkonsole (4), wobei die Achsbrücke (1) an der Federträgerkonsole (4) befestigt ist.

## Beschreibung

Die vorliegende Erfindung betrifft eine Achse mit einer unterhalb der Radachse angeordneten Achsbrücke gemäß dem Oberbegriff des Patentanspruchs 1.

Derartige Achsen werden heutzutage insbesondere in Niederflur-Omnibussen eingesetzt. Um einen möglichst tiefen Einstieg in derartigen Fahrzeugen zu gewährleisten, ist die Achsbrücke unterhalb der Radachsen angeordnet.

Nach dem Stand der Technik können die angetriebenen Räder über einen am Rad angeordneten Antriebsmotor angetrieben werden.

Eine Achse der eingangs genannten Art ist im Rahmen der DE 199 32 586 A1 der Anmelderin beschrieben. Hierbei besteht diese Achse aus einer unterhalb der Radachse angeordneten Achsbrücke und Antriebsrädern, die jeweils mit einem Antriebsmotor versehen sind. Der Antriebsmotor weist ein Gehäuse auf, welches einerseits drehfest mit dem Nabenträger der Achse verbunden ist, der die Radkräfte aufnimmt und andererseits Befestigungsmittel aufweist, an welchen die Achsbrücke sowie Aufhängungselemente der Achse und Lenker anbringbar sind, wobei die Aufhängungselemente der Achse und das Motorgehäuse auch einstückig ausgebildet sein können.

Im Fahrbetrieb werden die Kräfte und Momente, die von der Straße auf das Fahrzeug wirken, teilweise über die Achsbrücke und Schräglenker auf das Chassis des Fahrzeugs übertragen.

Wenn der vorgesehene Antriebsmotor Teil der tragenden Struktur ist, wie es beispielsweise bei der DE 199 32 586 A1 der Fall ist, ergeben sich durch die übertragenen Kräfte Verformungen im Motorgehäuse, die sich negativ auf den Antriebsmotor auswirken, beispielsweise auf den kleinen Luftspalt zwischen Rotor und Stator.

Insbesondere bei starken Motoren kann die Achsbrücke zur Vermeidung dieses Problems nicht am Motor vorbeigehen, da einerseits aufgrund der angehobenen Motorleistung der Motor größer dimensioniert und andererseits der zur Verfügung stehende Raum begrenzt ist.

Der vorliegenden Erfindung liegt die Aufgabe zugrunde, eine Achse mit einer unterhalb der Radachse angeordneten Achsbrücke vorzuschlagen, bei der die Nachteile des Standes der Technik vermieden werden. Insbesondere sollen die Verformungen aufgrund der äußeren Kräfte auf das Motorgehäuse verringert werden.

Diese Aufgabe wird durch die Merkmale des Patentanspruchs 1 gelöst. Weitere Ausgestaltungen gehen aus den Unteransprüchen hervor.

Demnach wird vorgeschlagen, die Achse so zu gestalten, dass die Achsbrücke an einer Konsole befestigt wird, mit welcher der Federträger verbunden ist.

Diese erfindungsgemäße Maßnahme ist mit geringem Bauaufwand verbunden und erfordert geringe Modifikationen, da die Federträgerkonsole ohnehin kräftig ausgeführt ist, um die Gewichtskräfte abführen zu können.

Durch die erfindungsgemäße Anordnung bzw. Befestigung der Achsbrücke bleibt der hintere, dem Rad abgewandte Teil des Motorgehäuses belastungsfrei und somit das Festlager der Motorwelle frei von den Verformungen, die sich durch die übertragenen Gewichtskräfte ergeben. Dies bedeutet, dass die Verformung des Gehäuses deutlich reduziert wird, so dass beispielsweise der Luftspalt zwischen Rotor und Stator durch Verformungen nur minimal beeinträchtigt wird, wodurch die Verlustleistung minimiert wird.

Ein weiterer Vorteil der Erfindung besteht darin, dass die Verschraubung der Achsbrücke von der anderen, dem Rad zugewandten Seite des Motorgehäuses bzw. der Federträgerkonsole erfolgen kann, wodurch die Montage erleichtert wird.

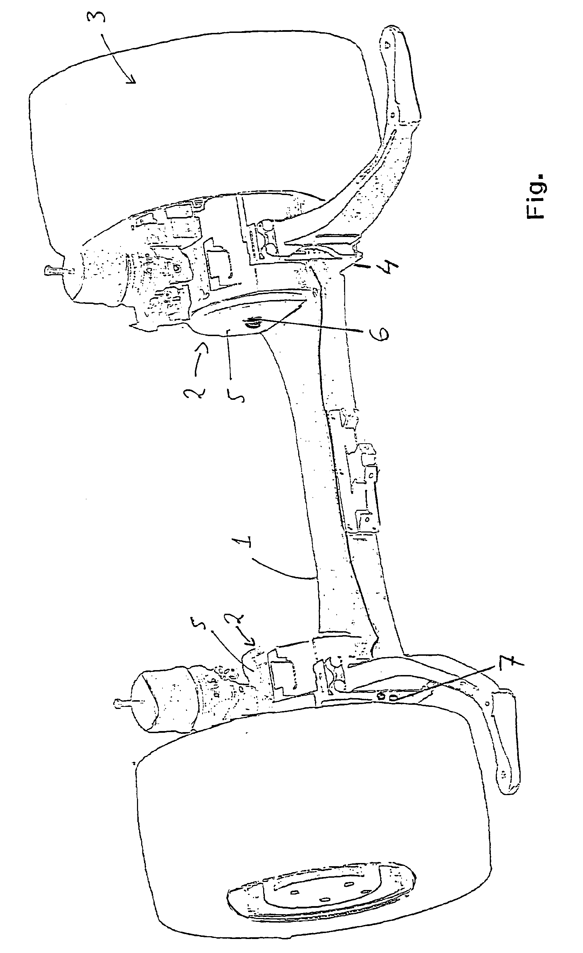

Die Erfindung wird im folgenden anhand der Figur, die eine erfindungsgemäße Anordnung der Achsbrücke zeigt, näher erläutert.

Die Figur zeigt eine Achse mit einer Achsbrücke 1, die Antriebsmotoren 2 für die Räder 3 sowie die Federträgerkonsole 4. Diese ist am Motorgehäuse 5 befestigt, vorzugsweise angegossen, angeschraubt oder angeschweißt. Des weiteren ist in der Figur das Festlager 6 der Motorwelle gezeigt.

Erfindungsgemäß ist die Achsbrücke 1 an der Federträgerkonsole 4 befestigt, so dass das Motorgehäuse 5 und insbesondere das Festlager 6 der Motorwelle möglichst frei von den Verformungen bleiben, die sich durch die von der Straße auf das Fahrzeug übertragenen Gewichtskräfte ergeben.

Bevorzugterweise ist die Achsbrücke 1 mittels Schrauben 7 befestigt, wobei auch jede weitere geeignete Befestigungsmöglichkeit realisierbar ist.

Die erfindungsgemäße Konstruktion ist mit geringem Bauaufwand realisierbar, wobei geringe Modifikationen notwendig sind; die Federträgerkonsole ist ohnehin kräftig ausgeführt, so dass keine weitere oder nur geringe Verstärkung derselben erforderlich ist.

### Bezugszeichen

- 1: Achsbrücke
- 2: Antriebsmotor
- 3: Rad
- 4: Federträgerkonsole
- 5: Motorgehäuse
- 6: Festlager der Motorwelle
- 7: Schrauben

## Patentansprüche

1. Achse mit einer unterhalb der Radachse angeordneten Achsbrücke (1), mit mindestens einem Antriebsmotor (2), der ein Motorgehäuse (5) aufweist und mit einer Konsole (4), welche mit einem Federträger verbunden ist, **dadurch gekennzeichnet, dass** die Achsbrücke (1) an der Konsole (4) befestigt ist.

2. Achse nach Anspruch 1, **dadurch gekennzeichnet, dass** die Achsbrücke (1) mittels Schrauben (7) an der Konsole (4) befestigt ist.

3. Achse nach Anspruch 1 oder 2, **dadurch gekennzeichnet, dass** die Befestigungsmittel zur Befestigung der Achsbrücke (1) an der den Rädern zugewandten Seiten der Konsole (4) vorgesehen sind.
